(19) Europäisches Patentamt
European Patent Office
Office européen des brevets

(11) **EP 3 000 334 B1**

(12) **EUROPEAN PATENT SPECIFICATION**

(45) Date of publication and mention
of the grant of the patent:
**15.08.2018 Bulletin 2018/33**

(51) Int Cl.:
**A23L 33/10** (2016.01)     **A23L 27/00** (2016.01)
**A23L 27/10** (2016.01)     **A23L 27/30** (2016.01)

(21) Application number: **14003288.9**

(22) Date of filing: **23.09.2014**

(54) **Enzyme modification of sweet blackberry leaves**

Enzymmodifizierung von den Blättern süßer Brombeeren

Modification enzymatique de feuilles de ronce sucrée de Chine

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.03.2016 Bulletin 2016/13**

(73) Proprietor: **ADM WILD Europe GmbH & Co. KG
69214 Eppelheim (DE)**

(72) Inventors:
• **Heidebach, Thomas
68535 Edingen-Neckarhausen (DE)**
• **de With, Axel
68723 Plankstadt (DE)**
• **Sass, Matthias
68723 Oftersheim (DE)**
• **Zeevaart, Jacob
Hebron, Kentucky 41048 (US)**

(74) Representative: **Grünecker Patent- und
Rechtsanwälte
PartG mbB
Leopoldstraße 4
80802 München (DE)**

(56) References cited:
EP-A1- 2 641 479          EP-A1- 2 954 785
WO-A1-2012/112180     WO-A1-2014/120564
WO-A1-2015/189346     AU-A1- 2007 221 796
JP-A- 2002 045 145       US-A1- 2007 082 106
US-A1- 2009 324 793    US-A1- 2015 305 380

• DARISE ET AL.: "Enzymic Transglucosylation of
Rubusoside and the Structure-Sweetness
Relationship of Steviol-Bisglycosides", AGRIC.
BIOL. CHEM., vol. 48, no. 10, 1984, pages
2483-2488, XP002737528,
• OTHANI ET AL.: "Further Study on the
1,4-a-Transglucosylation of Rubusoside, a Sweet
Steviol-Bisglucoside from Rubus suavissimus",
AGRIC. BIOL. CHEM., vol. 55, no. 2, 1991, pages
449-453, XP002737529,

**Description**

Transglycosylation by means of enzymes from the transglucosidase group is a well-known principle for modifying steviol glycosides on the molecular level. Steviol glycosides are a group of molecules with high intensity sweetening properties. They are up to 250 times sweeter than sucrose. Steviol glycosides can be found in high concentrations of up to 10% in leaves of the plant *Stevia rebaudiana.*

The two major steviol glycosides found in the leaves of the stevia plant are stevioside and rebaudioside A. Several other minor steviol glycosides are present, such as rebaudioside C, dulcoside, rubusoside, steviolbioside. rebaudioside B, rebaudioside D, rebaudioside E and rebaudioside F. The individual steviol glycosides differ in sweetness intensity and quality of taste. The quality of taste is often associated with the intensity of a liquorice or bitter aftertaste.

Highly concentrated isolates of steviol glycosides from crude stevia extracts are approved for use as high intensity sweeteners within the EU. They are also commercially used in the preparation of flavors, flavor modifiers, flavor enhancers and sweetness enhancers.

Steviol glycoside-enriched extracts from *Stevia rebaudiana* leaves in various degrees of purification have been used as substrates for transglycosylation.

Transglycosylation leads to the addition of glucose molecules to the various steviol glycoside molecules and thus results in an increase in their molecular weight. The glucose units can be attached at two different positions in the steviol glycoside molecule (C-13 or C-19). The quantity of attached glucose units is usually between one and five and sometimes even more. The exact kinetics of the formation of the individual glycosylated steviol glycosides during the enzymatic transglycosylation process is not yet fully understood (Lu et al., 2014: "Transglycosylation specificity of glycosyl donors in transglycosylation of stevioside catalyzed by cyclodextrin glucanotransferase", Food Chem., 159, 151-156). Each of the newly formed glycosylated steviol glycosides can exhibit different properties in terms of sweetness intensity and quality of taste due to the transglycosylation. These can generally be either improved or deteriorated in comparison to the original substrate molecule. As a consequence, in the last twenty years there has been a lot of effort to identify substrates and processes which achieve an overall improvement in the quality of steviol glycosides by enzymatic glycosylation with transglucosidases (Tanaka, O. et al., 1997: "Improvement of taste of natural sweeteners", Pure & Appl. Chem., 69 (4), 675-683; Li et al., 2013: "Transglycosylation of stevioside to improve the edulcorant quality by lower substitution using cornstarch hydrolyzate and CGTase", Food Chem., 138, 2064-2069).

The enzymatic reaction requires the presence of a glucose donor as a co-substrate. Although only a relatively small amount of glucose units is attached on molecular base to the steviol glycosides during the enzymatic reaction, an excess of the glucose donor is required to keep the reaction equilibrium on the product side. Maltodextrin is often used as a glucose donor. To achieve an efficient conversion, a concentration ratio of steviol glycoside to maltodextrin in the range of 0.5:1 to 2:1 has been used. This means, for example, that in the case of a 1:1 ratio, 15 wt.% maltodextrin is added to an aqueous solution of 15 wt.% steviol glycosides, leading to a reaction solution with 30 wt.% dry matter (US20090324793 A1, Li et al., 2013).

Another plant which is known to have a sweet taste is the sweet blackberry, a plant of the genus Rubus, also known as Chinese Blackberry. Sweet blackberry leaves are commonly used in herbal teas. The leaves of the Chinese sweet Blackberry (Rubus suavissimus, aka R. chingii and R. palmatus) contain the sweet glycoside rubusoside ($\beta$-D-glucosyl ester of 13-O-$\beta$-D-glucosylsteviol) in an amount of approximately 5 to 9 wt.% as well as other minor steviol glycosides. Rubusoside is also a minor steviol glycoside in *Stevia rebaudiana.*

Extracts from sweet blackberry leaves can also be used as an ingredient for the preparation of sweeteners, flavors, flavor modifiers, flavor enhancer, sweetness enhancers or masking agents (EP-A-2641479).

The enzymatic transglycosylation of isolated rubusoside from *Rubus suavissimus* by means of a cyclodextrin glucanotransferase has been shown (Darise et al., "Enzymic Transglucosylation of Rubusoside and the Structure-Sweetness Relationship of Steviol-Bisglycosides", Agric. Biol. Chem., 48 (10), 2483-2488, 1984 and Othani et al., "Further Study on the 1,4-$\alpha$-Transglucosylation of Rubusoside, a Sweet Steviol-Bisglucoside from Rubus suavissimus", Agric. Biol. Chem., 55 (2), 449-453, 1991). In these studies rubusoside was isolated from the leaves of Rubus suavissimus and subsequently transglycosylated by means of cyclodextrin glucanotransferase and starch as a co-substrate at a temperature of 28 to 40°C for 18 to 96 hours under controlled conditions. Several newly formed glycosylated steviol glycosides were identified and characterized according to individual sweetness and quality of taste. It was found that some rubusoside derivates had improved and some had inferior properties in terms of sweetness and quality of taste in comparison with the original rubusoside, depending on the newly formed molecular structure.

In contrast to steviol glycosides from *Stevia rebaudiana,* which are commonly used in the form of highly concentrated isolates extracted from dried stevia leaves, sweet blackberry leaves or extracts from sweet blackberry leaves are usually used without isolation and/or selective enrichment of the contained rubusoside.

EP-A-2641479 and EP-A-2236043 describe standard extraction procedures of sweet blackberry leaves. Generally, sweet blackberry leaves are extracted with hot water at a temperature from 60°C to 100°C for 1 to 5 hours at a weight ratio of dry leaves to water of 1:5 to 1:15. Afterwards the solids are removed by decantation or centrifugation and the residue is concentrated. Preferably, the concentrate can be cooled to 0 to 5°C and again decanted and/or centrifuged. The remaining residue can be further concentrated and/or pasteurized and/or spray dried to a powder. Finally, EP-A-2954785, published on 13.06.2014, discloses rubusoside and/or alpha-glycosylrubusoside sweeteners, made by trans-glycosylating previously extracted sweet blackberry leaves (example 1). Generally, the improvement of the sweetness quality of sweet blackberry leaves by means of enzymatic transglycosylation has been described so far only by:

1) selective enrichment and/or removal of the rubusoside from the sweet blackberry leaf extract,
2) glycosylation of isolated rubusoside under standardized process conditions to gain a mixture of rubusoside derivates with improved properties. This involves the preparation of an aqueous solution of isolated rubusoside and the addition of an appropriate amount of co-substrate.

However, the main application of sweet blackberry leaves of *Rubus suavissimus* is in the form of a crude extract without selective enrichment of rubusoside since within the EU sweet blackberry leaves are commonly used as a plant extract and not as a rubusoside-based high intensity sweetener.

Furthermore, the use of a crude extract instead of highly purified rubusoside is much less cost intense.

Hence, there is a high demand for an enzymatic transglycosylation of rubusoside from sweet blackberry leaves without cost intensive isolation of the rubusoside before enzyme treatment.

It is the object of the present invention to provide a sweetener on the basis of rubusoside which has excellent sweetness and quality of taste properties.

Said object is solved by a method of producing an extract from sweet blackberry leaves (*Rubus suavissimus*) containing less than 95 wt. % rubusoside based on dry matter, wherein at least a part of the rubusoside is glycosylated, said method comprising an extraction of sweet blackberry leaves and an enzymatic glycosylation simultaneously carried out during extraction with a transglucosidase enzyme under addition of a co-substrate as a glucose donor.

The present specification further discloses the use of the extract prepared according of the present invention for the preparation of a sweetener, a flavor modifier, a flavor enhancer, a sweetness enhancer or a masking agent, as well as a food product containing the extract prepared according to the present invention as an ingredient.

In a preferred embodiment, the extract prepared according to the present invention contains 3 to 50 wt.% rubusoside, based on dry matter. In combination with the above or below embodiments, the rubusoside content of the extract is preferably 5 to 40 wt.%, more preferably 10 to 30 wt.% and most preferably 3 to 20 wt.%, based on dry matter.

In a further preferred embodiment, at least 20% of the rubusoside in the extract prepared according to the present invention is glycosylated. In combination with the above or below embodiments, the percentage of glycosylated rubusoside in the extract is preferably at least 30%, more preferably at least 40% and most preferably at least 50% (e.g. between 50 and 70%).

In another preferred embodiment, the rubusoside in the extract prepared according to the present invention is glycosylated with 1 to 5 D-glucopyranosyl units.

In a further preferred embodiment, the extract prepared according to the present invention is an aqueous extract.

In another preferred embodiment, in combination with any of the above or below embodiments, the extract prepared according to the present invention has a Brix of 45 to 80°, preferably 50 to 70°, more preferably 55 to 65°.

The term "degrees Brix" (°Bx) refers to a unit representing the soluble solid content in a solution. One degree Brix corresponds to 1 g of sucrose in 100 g of sucrose/water solution and thus represents the concentration of the solution as a percentage by weight (% w/w). A solution has 1 °Bx if the density of said solution is the same as a solution of 1 gram of sucrose in 100 grams of sucrose/water solution. The °Bx is usually measured by means of a refractometer.

In a preferred embodiment of the method according to the present invention, cyclomaltodextrin glucanotransferase (EC 2.4.1.19) is used as the transglucosidase enzyme.

In another preferred embodiment of the method according to the present invention, maltodextrin is used as the co-substrate. In a preferred embodiment in combination with any of the above or below embodiments, the maltodextrin is obtained from starch by partially hydrolyzing the starch. In a preferred embodiment in combination with any of the above or below embodiments, the source of the starch is potatoes, wheat, maize, rice or cassava.

In a further preferred embodiment, the method of the present invention further comprises the step of concentrating the extract containing the glycosylated rubusoside.

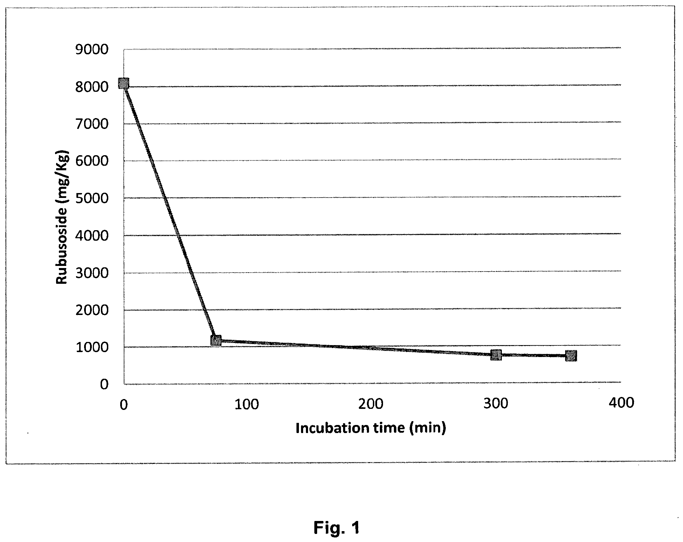

Figure 1 shows the amount of residual non-glycosylated rubusoside during incubation of a blackberry leaf extract at 80°C as described in Example 1.

The term "extract" is used representatively for all products that are obtained from a plant by means of an extraction with a solvent, such as with maceration or percolation. The extract may be in a liquid, semi-solid or solid form.

As for the extraction, the parts of the plant are submitted either in the raw state or dried to maceration or percolation. In a preferred embodiment, in combination with any of the above or below embodiments, dried plant material is used.

The plant parts can be broken into small pieces in a suitable manner before the extraction. This can be done, for example, by rubbing or cutting them. Alternatively, the plant parts can be pressed out in the raw state, e.g. directly after the harvest, in order to produce a juice from pressing before the extraction.

Generally, an extraction of the plant parts including leaves, twigs and blossoms is performed with a suitable solvent. In a preferred embodiment, in combination with any of the above or below embodiments, the solvent for the extraction is selected from water, alcohols such as methanol, ethanol or isopropyl alcohol, or chlorinated solvents such as dichloromethane, as well as acetone, acetylacetone, ethyl acetate, ammonia or glacial acetic acid. In a further preferred embodiment, in combination with any of the above or below embodiments, supercritical carbon dioxide is used as a solvent. In another preferred embodiment, in combination with any of the above or below embodiments, mixtures of two or more of the above-mentioned solvents are used for the extraction. In a preferred embodiment, in combination with any of the above or below embodiments, water is used as the solvent for extraction. In a further preferred embodiment, in combination with any of the above or below embodiments, fats such as pork fat, waxes such as beeswax, or oils such as olive oil and almond oil, are used for the extraction.

In order to achieve the highest possible yield, the plant material can be extracted a number of times. In a preferred embodiment, in combination with any of the above or below embodiments, the extraction is repeated 2 to 6 times, more preferably 3 times. In this case, it is also possible to use different solvents in the various extraction steps or an extraction with a solvent can be followed by an extraction with fat, wax or oil, or vice versa.

In a preferred embodiment, in combination with any of the above or below embodiments, the maceration procedure is performed for 5 to 9 days, preferably for 7 days, at room temperature with a mixture of water and ethanol. The solvent mixture is poured over the plant elements and left for the above time period.

The crude extraction product can also be concentrated, dried and/or further processed before use. To produce a dry extract, the solvent can be evaporated from the liquid raw extract, the concentrated extract or the cleaned extract by, for example, spray drying, freeze drying or vacuum drying. The further processing can include cleaning steps known to the person skilled in the art, such as centrifugation, filtration and decantation, in order to remove suspended materials from the extract. In a preferred embodiment, in combination with any of the above or below embodiments, the crude product is used without further purification steps.

To improve the sweetness quality of non-rubusoside enriched crude extract from sweet blackberry leave, the glycosylation of rubusoside is preferably conducted during or directly after the extraction process. The reason is that sweet blackberry leaf extracts are mainly usable as crude extracts and not in the form of isolated rubusoside concentrates.

Currently, no process for efficient enzymatic glycosylation of rubusoside from rubus suavissimus in a non-rubusoside enriched sweet blackberry leaf extract is known.

It was surprisingly found that an efficient transglycosylation, resulting in an improvement of overall sweetness quality of sweet blackberry leaf extracts, can be achieved by treating a sweet blackberry leaf extract with a transglucosidase enzyme such as cyclodextrin glucanotransferase (EC 2.4.1.19) and a glucose donor as a co-substrate during extraction. The enzymatic glycosylation of non-rubusoside enriched crude extract can be conducted under conditions which simultaneously allow an efficient extraction such as a temperature of 60 - 100°C for 1 to 5 h.

As a glucose donor, maltodextrin is preferably used. In a preferred embodiment, in combination with any of the above or below embodiments, the glucose donor is a maltodextrin having a DE (dextrose equivalent) value of 3 to 20. In combination with any of the above or below embodiments, the DE value of the maltodextrin used as co-substrate is preferably 5 to 20, more preferably 10 to 17 and most preferably 11 to 16 (such as 12, 13, 14 or 15).

The resulting non-rubusoside enriched glycosylated sweet blackberry leaf extract shows improved properties when used alone or as an ingredient in a sweetener, flavor, flavor modifier, flavor enhancer, sweetness enhancer or masking agent.

The extract can be obtained by using standard extraction procedures known to the person skilled in the art as described above. In a preferred embodiment, in combination with any of the above or below embodiments, sweet blackberry leaves are extracted with water with a temperature of from 60 to 80°C for 1 to 5h. In a preferred embodiment, in combination with any of the above or below embodiments, the weight ratio of dry sweet blackberry leaves to water is in the range of 1:5 to 1:15. Afterwards the solids are preferably removed by decantation or centrifugation and the residue is concentrated. The concentrate can be preferably cooled to 0 to 5°C and again decanted and/or centrifuged. In a preferred embodiment, in combination with any of the above or below embodiments, the remaining residue is further concentrated and/or pasteurized. In another preferred embodiment, in combination with any one of the above or below embodiments, the extract is spray dried to a powder.

The amounts of the reactants and the conditions during the enzymatic transglycosylation such as the pH and the temperature can be varied in order to obtain an extract with a desired sweetness and taste.

The following parameters can be adjusted by a person skilled in the art to achieve a maximum transglycosylation speed and overall efficiency:

- Concentration of glucose donor
- Concentration of enzyme

- pH of the reaction/extraction medium
- Temperature of the reaction/extraction medium
- Duration of the reaction/extraction process
- Overall dry matter (Brix) in the reaction/extraction medium

The overall transglycosylation rate can be expressed by comparison of the amount of rubusoside in the crude extract before and after the enzyme reaction as the conversion rate.

Conversion rate (%) = 100% – (amount of rubusoside (w/w) in the extract after enzyme treatment divided by the amount of rubusoside (w/w) in the extract before enzyme treatment) x 100%

The improvement of sweetness quality and intensity depends on the conversion rate (the percentage of glycosylated rubusoside). However, there is no fixed minimum threshold for a conversion rate to achieve a minimum significant optimization effect when compared with a non-treated sample. On this account, a person skilled in the art has to decide what conversion rate is intended to achieve a desired sweetness quality and intensity.

In a preferred embodiment, in combination with any of the above or below embodiments, at least 50% of the rubusoside in the crude extract is glycosylated.

However, the method of the present invention is not limited to those resulting in more than a 50% conversion rate since lower conversion rates may also achieve sufficient sweetness quality and intensity.

It was surprisingly found that the process conditions required for an efficient extraction (described above) also allow an efficient enzymatic transglycosylation. Thus, in a preferred embodiment of the method according to the present invention, in combination with any of the above or below embodiments, the extract from sweet blackberry leaves is obtained *in situ* during the enzymatic transglycosylation.

Thus, in a preferred embodiment of the method according to the present invention, in combination with any of the above or below embodiments, the enzymatic transglycosylation is carried out at a temperature of 60 to 100°C, preferably 65 to 90°C, most preferably at 70 to 80°C, for 1 to 6 h, preferably 2 to 5 h, with a reaction mixture comprising a transglucosidase enzyme, a co-substrate and dry sweet blackberry leaves. In a preferred embodiment, in combination with any of the above or below embodiments, the weight ratio of dry sweet blackberry leaves to water is in the range of 1:5 to 1:15, more preferably 1:7 to 1:13, most preferably 1:10.

In a further preferred embodiment, in combination with any of the above or below embodiments, the concentration of the co-substrate (glucose donor) is within the range of 0.5 to 50% (w/v), more preferably 1 to 40% (w/v), most preferably 2 to 30% (w/v), based on the total volume of the reaction mixture.

In a further preferred embodiment, in combination with any of the above or below embodiments, the enzyme concentration is within the range of 0.05 to 5% (w/v), more preferably 0.1 to 4% (w/v), most preferably 0.5 to 3% (w/v), based on the total volume of the reaction mixture.

It was surprisingly found that the addition of significant amounts of dissolved dry matter in the form of a co-substrate and the rather low concentration of rubusoside in the non-rubusoside enriched crude extract in the aqueous extraction solution do not negatively affect the extraction efficiency.

The pH of the substrate solution does not always have to be adjusted to shift the reaction conditions towards optimum reaction conditions for the enzyme, since the natural pH of the extract can vary and the reaction proceeds in a broad pH range. In a preferred embodiment, in combination with any of the above or below embodiments, the pH is within the range of 4 to 8, more preferably 4.5 to 6, most preferably 5 to 5.5. In a further preferred embodiment, in combination with any of the above or below embodiments, the pH of the reaction mixture can be adjusted by the addition of a suitable base such as NaOH.

In a preferred embodiment, in combination with any of the above or below embodiments, the crude sweet blackberry leaves extract used in the method of the present invention has a Brix in the range of 2 to 50°, more preferably 5 to 40°, and most preferably 10 to 30° Brix.

The following examples further describe the invention:

Examples:

**Example 1:** Preparation of glycosylated blackberry leaf extract from crude extract

Example 1 does not form part of the claimed invention and is to be seen as comparative thereto.

100 kg of dried and chopped blackberry leaves were added to 1000 kg of water. The mixture was then incubated at 80°C for 1 h. Subsequently, the sample was centrifuged to remove solids and the remaining solution was then concentrated to 60° Brix by means of a rotary evaporator.

A sample was taken from the obtained concentrated extract and diluted with water to 15° Brix. To 1000 g of the thus obtained aqueous solution, 150 g of maltodextrin DE 15 and 4 g of cyclodextrin glucanotransferase (Toruzyme 3.0L, Novozymes) was added and incubated without stirring for 1 - 6 h at 80°C. The pH was adjusted to 5.5 with 0.5 mM NaOH. Samples were taken during the incubation time and the amount of residual non-glycosylated rubusoside was determined via HPLC (see Fig. 1).

It can be seen that after 75 min of incubation more than 90% of the rubusoside was already glycosylated.

**Example 2:** Glycosylation during the sweet blackberry leaves extraction process

Various amounts of maltodextrin DE 15 (0.1 g / 0.5 g / 1 g / 3 g) were dissolved in 100 g water, respectively. Subsequently 10 g of dried and chopped blackberry leaves and 130 mg cyclodextrin glucanotransferase (Toruzyme; Novozymes) were added to the aqueous solution. One additional sample was prepared without addition of enzyme and maltodextrin. The mixtures were incubated under slight stirring at 70°C for 2.5 h. To inactivate the enzyme, the pH of the samples was adjusted to below 3.5 and the samples were further incubated at 85°C for 10 min. Afterwards, the samples were cooled to room temperature. Subsequently, the samples was centrifuged (3000g/5min) to remove solids. The resulting liquid extract was used for further tests.

Table 1: Resulting °Brix and rubusoside content dependence on maltodextrin addition.

| Maltodextrin (g) | °Brix of resulting liquid extract | Rubusoside content of resulting liquid extract (mg/L) | Resdual amount of rubusoside (%) | Other steviolglucosides (mg/L) and glycosylated steviol glycosides |
|---|---|---|---|---|
| 0 | 3.8 | 3250 | - | 1700 |
| 0.1 | 4 | 2840 | 87.4 | 2000 |
| 0.5 | 4.4 | 2240 | 68.9 | 3100 |
| 1 | 5 | 1810 | 55.7 | 3500 |
| 3 | 6.9 | 1070 | 32.9 | 4600 |

From Table 1 it can be seen that in the non-treated extract about 4950 mg/L steviol glycosides are present, from which rubusoside is the major steviolglucoside (65%).

The table further shows that the presence of maltodextrin as dry matter in the extraction medium surprisingly does not negatively influence the extraction efficiency of the dried leaves, since the °Brix generated by the dissolved dry matter from the blackberry leaves is similar for all samples, independent of the amount of maltodextrin added.

It can further be seen that the glucosylation degree is dependent on the concentration of the co-substrate (maltodextrin) and a rather high ratio of co-substrate to rubusoside is required to achieve a high conversion rate such as at least 50%.

The depletion of rubusoside and hence the production of glycosylated steviol glycosides can be generally further increased by increasing the amount of enzyme, adjusting the pH to the optimum (for the enzyme) range of between 5 and 5.5 or extending the incubation time.

The reaction rates are significantly lower in comparison to Example 1. The reason is that the available rubusoside is only released during the extraction process and the overall amount of available substrate and co-substrate is significantly lower. However, since the extraction and the enzymatic glycosylation can be carried out simulataneously, the overall efficiency and cost effectiveness of the method is improved.

**Example 3:** Preparation of a concentrated enzyme modified blackberry leaf extract

30 g maltodextrin were dissolved in 1000 g water. Subsequently, 100 g of dried and chopped blackberry leaves and 1.3 g cyclodextrin glucanotransferase (Toruzyme; Novozymes) were added to the aqueous solution. The mixture was incubated under slight stirring at 70°C for 4 h. The pH of the mixture was between 4.7 and 4.9 during the whole process and not adjusted.To inactivate the enzyme, the pH of the sample was adjusted to below 3.5 and the sample was further incubated at 85°C for 10 min. Afterwards, the sample was cooled to room temperature. Subsequently, the sample was centrifuged (3000g/5min) to removed solids. After centrifugation the sample had a Brix of 6.9°. It was then concentrated by means of a rotary evaporater until it reached a final Brix of 58°. The resulting concentrated liquid extract contained 10.2 g/kg rubusoside and 67 g/kg other steviol glucosides (mg/L) including glycosylated steviol glycosides. The results show that the conversion rate of rubusoside into glycosylated rubusoside is more than 50%, since a non-treated sample at 58° Brix has an expected rubusoside conctent of about 50 g/kg. Comparison with Example 2 shows that extension of the extraction time does not further increase the amount of extracted solids from the sweet blackberry leaves but may still increase the conversion rate.

It was confirmed by HPLC that the rubusoside was glycosylated with 1 to 5 D-glucopyranosyl units.

**Example 4:** Impact of glucosylation on the sweetness quality of sweet blackberry leaf extract.

The glycosylated sweet blackberry leaf extracts obtained in Examples 1 and 3 were each diluted with distilled water to achieve a concentration of 1g/L blackberry leaf extract. This dilution was sensorially compared with the respective non-glucoslyated sweet blackberry leaf extract, diluted to the same concentration in distilled water. It was found that in all cases the sweetness intensity and the quality of sweetness were both significantly increased for the glycosylated sweet blackberry leaf extract, in comparison to the non-glycosylated extract.

## Claims

1. A method of producing an extract from sweet blackberry leaves (*Rubus suavissimus*) containing less than 95 wt. % rubusoside based on dry matter, wherein at least a part of the rubusoside is glycosylated, said method comprising an extraction of sweet blackberry leaves and an enzymatic glycosylation simultaneously carried out during extraction with a transglucosidase enzyme under addition of a co-substrate as a glucose donor.

2. The method according to claim 1, wherein cyclomaltodextrin glucanotransferase is used as the transglucosidase enzyme.

3. The method according to claim 1 or 2, wherein maltodextrin is used as the co-substrate.

4. The method according to any of claims 1 to 3, further comprising the step of concentrating the extract containing the glycosylated rubusoside.

## Patentansprüche

1. Verfahren zur Herstellung eines Extraktes aus süßen Brombeerblättern (*Rubus suavissimus*), enthaltend weniger als 95 Gew.% Rubusosid, bezogen auf die Trockensubstanz, wobei mindestens ein Teil des Rubusosids glykosyliert ist, wobei das Verfahren eine Extraktion von süßen Brombeerblättern und eine enzymatische Glykosylierung umfasst, die gleichzeitig während der Extraktion mit einem Transglucosidase-Enzym unter Zugabe eines Cosubstrats als Glukosespender durchgeführt wird.

2. Verfahren nach Anspruch 1, wobei Cyclomaltodextrin-Glucanotransferase als Transglucosidase-Enzym verwendet wird.

3. Verfahren nach Anspruch 1 oder 2, wobei Maltodextrin als Cosubstrat verwendet wird.

4. Verfahren nach einem der Ansprüche 1 bis 3, ferner umfassend den Schritt des Konzentrierens des Extrakts, der das glykosylierte Rubusosid enthält.

## Revendications

1. Procédé de production d'un extrait de feuilles de ronce sucrée de Chine (*Rubus suavissimus*) contenant moins de 95 % en pds de rubusoside sur une base de matière sèche, au moins une partie du rubusoside étant glycosylée, ledit procédé comprenant une extraction de feuilles de ronce sucrée de Chine et une glycosylation enzymatique conduite simultanément durant l'extraction avec une enzyme transglucosidase sous l'addition d'un co-substrat comme donneur de glucose.

2. Procédé selon la revendication 1, la cyclomaltodextrine glucanotransférase étant utilisée comme enzyme transglucosidase.

3. Procédé selon la revendication 1 ou 2, la maltodextrine étant utilisée comme co-substrat.

4. Procédé selon l'une quelconque des revendications 1 à 3, comprenant en outre l'étape de concentration de l'extrait contenant le rubusoside glycosylé.

**Fig. 1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20090324793 A1, Li
- EP 2641479 A
- EP 2236043 A
- EP 2954785 A

### Non-patent literature cited in the description

- **LU et al.** Transglycosylation specificity of glycosyl donors in transglycosylation of stevioside catalyzed by cyclodextrin glucanotransferase. *Food Chem.,* 2014, vol. 159, 151-156
- **TANAKA, O. et al.** Improvement of taste of natural sweeteners. *Pure & Appl. Chem.,* 1997, vol. 69 (4), 675-683
- **LI et al.** Transglycosylation of stevioside to improve the edulcorant quality by lower substitution using cornstarch hydrolyzate and CGTase. *Food Chem.,* 2013, vol. 138, 2064-2069
- **DARISE et al.** Enzymic Transglucosylation of Rubusoside and the Structure-Sweetness Relationship of Steviol-Bisglycosides. *Agric. Biol. Chem.,* 1984, vol. 48 (10), 2483-2488
- **OTHANI et al.** Further Study on the 1,4-$\alpha$-Transglucosylation of Rubusoside, a Sweet Steviol-Bisglucoside from Rubus suavissimus. *Agric. Biol. Chem.,* 1991, vol. 55 (2), 449-453